# EUROPÄISCHE PATENTSCHRIFT

(11) **EP 1 776 558 B1**
(45) Veröffentlichungstag und Bekanntmachung des Hinweises auf die Patenterteilung: **13.08.2014**
(21) Anmeldenummer: 05770015.5
(22) Anmeldetag: 26.07.2005
(51) Int. Cl.: G01B 13/06

(54) **DICKENPROFILMESSGERÄT FÜR DÜNNSCHICHTIGE MESSOBJEKTE**
THICKNESS PROFILE GAUGE FOR THIN-LAYER OBJECTS TO BE MEASURED
INSTRUMENT DE MESURE DE L'EPAISSEUR D'OBJETS EN MINCE COUCHE A MESURER

(30) Priorität: 11.08.2004 DE 102004039652
(43) Veröffentlichungstag der Anmeldung: 25.04.2007
(73) Patentinhaber: Octagon Process Technology GmbH, 97076 Würzburg (DE)
(72) Erfinder: GEIGER, Jürgen, 97299 Zell (DE)
(74) Vertreter: Pöhner, Wilfried Anton
(86) Internationale Anmeldenummer: PCT/DE2005/001313
(87) Internationale Veröffentlichungsnummer: WO 2006/015575

(56) Entgegenhaltungen:
- EP-A- 1 193 041
- DE-A1- 19 632 385
- US-A- 4 292 838
- US-A- 6 029 502
- US-B1- 6 318 153

## Beschreibung

Die Erfindung betrifft eine Vorrichtung zur Messung der Dicke von dünnschichtigen Messobjekten, insbesondere von Folien oder Filmen, mit einem Sensor, einem Luftschild und einer im Randbereich des Luftschildes angeordneten Luftzufuhr.

Aus dem Stand der Technik sind verschiedene Vorrichtungen (US 4450404, WO 92/20989, US 4292838, US 6318153B1, DE 19632385 und US 6029502 bzw. EP 0801290) zur berührungslosen Messung des Dickenprofils von Blasfolien unmittelbar nach der Herstellung der Folie nach dem Extruder-Verfahren bekannt. Unter Ausnützung des Venturi-Effektes wird der Abstand zwischen Folie und Messsensor, durch einen senkrecht auf die Folie gerichteten Luftstrahl fixiert und auf konstantem Abstand gehalten. Voraussetzung für ein genaues Messergebnis ist, neben der konstanten Beabstandung von Messobjekt und Sensor, dass der Sensor das sich bewegende und weiche, verformbare Messobjekt nicht beführt. Das zwischen Luftschild und Messobjekt aufgebaute Luftkissen ist zur Feineinstellung des Abstandes zwischen Messobjekt und Sensorkopf durch die Variation der Luftzufuhr regulierbar. Bei den bekannten Vorrichtungen wird das Messobjekt jedoch ausschließlich durch eine in senkrechter Richtung auf das Messobjekt gerichtete Luftströmung fixiert.

In der Druckschrift US 6,381,153 wird außerdem offenbart, dass die in senkrechter Richtung auf das Messobjekt strömende Luft zumindest in den Randbereichen des Sensors bzw. der den Sensor umgebenden Platte aufgrund eines Luftsogs zu einer Bewegung des Messobjekts in Richtung des Sensors führt, während sich der Abstand zwischen Messobjekt und Sensor in jenen Bereichen, die den Luftaustrittsdüsen unmittelbar gegenüber liegen, aufgrund des Drucks der anströmenden Luft vergrößert.

Nachteiligerweise führt die Anziehung der Folie bei senkrechter Anströmrichtung des Messobjektes zur Stabilisierung einer relativ kleinen Folienfläche. Darüberhinaus können bei senkrechter Anströmrichtung Strömungsturbulenzen auftreten, die leicht zur Folge haben können, dass der Abstand zwischen Messkopf und Messobjekt nicht ausreichend konstant bleibt und es somit zu einer Beeinträchtigung der Messgenauigkeit kommen kann.

Die Aufgabe der Erfindung besteht vor diesem Hintergrund in der Konstruktion einer Vorrichtung zur Dickenmessung an Folien, bei der zur Gewährleistung der Messgenauigkeit der Abstand zwischen Messobjekt und Messsensor mit möglichst geringem baulichen Aufwand konstant gehalten wird und zugleich die Stabilisierung des Messobjektes in einem möglichst großen, den Sensorkopf umgebenden Bereich des Luftschildes sicher gestellt wird.

Zur Lösung der Aufgabe lehrt die Erfindung eine Vorrichtung zur Dickenmessung von Folien mit den im Anspruch 1 angegebenen Merkmalen.

Die Im Wesentlichen tangentiale Ausrichtung der Luftzufuhr bezüglich des Luftschildes erlaubt die Justierung der Luftzufuhr, so dass zwischen Luftschild und Messobjekt eine laminare Strömung einstellbar ist. Bei gänzlich planarem Luftschild, das beispielsweise keine abgeschrägten Kanten aufweist, entspricht die tangentiale Strömungsrichtung einer parallelen Strömungsrichtung. Wenn die Luft nicht parallel zur planaren Oberfläche des Luftschildes eingeführt wird, sondern durch die Düsen zunächst einen abgeschrägten Kantenbereich des Luftschildes angeströmt wird kommt eine bezüglich des Luftschildes laminare Strömung zustande.

Der Kerngedanke der Erfindung besteht darin, dass aufgrund der im Wesentlichen tangentialen Ausrichtung der Luftzufuhr zwischen Messobjekt und Sensor bzw. dem den Sensor umgebenden Luftschild eine laminare Luftströmung aufgebaut werden kann. Das entstehende Luftpolster, das im Randbereich des Luftschildes aufgrund der Reibung mit der Umgebungsluft auch turbulente Strömungsanteile aufweisen kann, ist über den Wesentlichen Teil der Oberfläche des Luftschildes homogen, wobei die Größe des Luftschildes variabel ist. Bei größeren Luftschilden ist eine entsprechende Erhöhung der Zahl und/oder der Ausdehnung der zur Luftzufuhr dienenden Düsen erforderlich. Darüberhinaus sind bei tangentialer Ausrichtung der Luftzufuhr im Gegensatz zu der aus dem Stand der Technik bekannten senkrechten Ausrichtung höhere Luftgeschwindigkeiten möglich.

Mit der laminaren Strömung ist eine zwischen dem Luftschild und dem Messobjekt wirkende Sogwirkung verbunden. Bei beweglicher und zugleich kräftefreier Aufhängung der aus Luftschild, Sensorhalterung und Sensor bestehenden Einheit wird der Sensor aufgrund der der Sogwirkung auch bei leichter Bewegung des Messobjektes in konstantem Abstand zu diesem gehalten. Alternativ zur sich selbst regulierenden Bewegung bei kräftefreier Aufhängung der aus Sensor und Luftschild bestehenden Einheit, ist deren Bewegung natürlich auch durch einen Regelkreis steuer- und kontrollierbar.
Im Vergleich zur senkrechten Strömungsrichtung ist die mit der laminaren Strömung verbundene Sogwirkung größer und führt daher zur besseren Stabilisierung des Messobjektes. Bei besonders flexiblen oder besonders steifen Messobjekten führt dies vorteilhafterweise zur Verbesserung der Messergebnisse.

Im Querschnitt weist die mit der erfindungsgemäßen Vorrichtung erzielbare Luftströmung, die sich mit einheitlicher Front über die Breite des Luftschildes erstreckt, ein leicht keulenförmiges Profil auf. Dieses Profil bleibt erfahrungsgemäß auch erhalten, wenn die Oberfläche der Folie, wie der Folienherstellung nach dem Extruder-Verfahren üblich, eine Krümmung beschreibt. Dieses vorteilhafte Verhalten lässt sich erklären mit der Bernoulli-Gleichung, die besagt, dass an jedem Ort für eine Strömungslinie die Summe aus statischem und dynamischem Druck konstant ist. Demnach wird bei geringem Abstand zwischen Windschild und Messobjekt, aufgrund der höheren Geschwindigkeit unmittelbar am Windschild, ein statischer Unterdruck erzeugt, der die Luftströmung an der Oberfläche "kleben" lässt und bei stabilem Strömungsverhalten die Folie auch noch im Bereich gekrümmter Flächen stabilisiert. Neben der Form der angeströmten Fläche hängt die Sogwirkung u.a. von der Luftmenge, der Luftgeschwindigkeit, von der Fläche des Luftschildes sowie von der Absaugung der Luft ab.

Zur Gewährleistung einer laminaren Luftströmung ist außerdem vorgesehen, dass das Luftschild zusammen mit dem durch eine Halterung am Luftschild befestigten Sensor kippbar befestigt ist. Diese Ausführungsform der Vorrichtung erlaubt neben der Schrägstellung der Luftzufuhr ebenfalls die Anpassung an eine gegebenenfalls schräg oder gewölbt verlaufende Oberfläche eines Messobjektes.

Es ist vorgesehen, dass der Sensor, der mit dem Luftschild eine funktionelle Einheit bildet, am Luftschild justierbar befestigt ist, wobei auch der Abstand des Sensors zum Messobjekt und zum Luftschild variabel einstellbar ist. Die Einstellung kann manuell durch eine oder mehrere Stellschrauben erfolgen. Denkbar ist aber auch die maschinelle Einstellung beispielsweise mit Hilfe.von Servomotoren.

Es liegt auch im Rahmen der Ereindung, dass der Sensor und das Luftschild in senkrechter und/oder paralleler Richtung zum Messobjekt nachführbar sind. Dabei ist denkbar, dass Sensor und Luftschild mit bestimmtem Bewegungsradius auch während der Messung bewegt werden. Die Vorteile dieser Ausführungsform können dahingehend genutzt werden, dass der Sensor und das Luftschild bei einer Folie mit beispielsweise inhomogener Oberflächein jenen Bereiche bewegt werden können, die eine zuverlässigere Messung erlauben. Dabei kann die Bewegung des Sensors auch unabhängig vom Luftschild erfolgen, falls die zur Aufnahme des Sensor vorgesehene Öffnung im Luftschild größer dimensioniert ist als die Außenmaße des Sensorkopfes, und daher eine entsprechende Bewegung des Sensor erlaubt.

Das Luftschild kann zur optimalen Ausbildung der Eigenschaften des Luftkissens oder aus konstruktiven Gründen nicht nur einteilig, sondern auch mehrteilig aufgebaut sein.

In einer Weiterbildung ist vorgesehen, dass jeder Sensor bewegbar an einer Halterung befestigt wird, die wiederum am Luftschild befestigt ist. Die Öffnung im Luftschild ist dabei so bemessen, dass der Sensor oder zumindest der Kopf des Sensors innerhalb der Öffnung des Luftschildes in alle drei Raumrichtungen bewegbar ist. Wichtig ist insbesondere die Bewegung des Sensors in senkrechter Richtung zum Messobjekt relativ zur Oberfläche des Luftschildes. Die Größe der Öffnung sollte jedoch zur Vermeidung turbulenter Strömung jedoch nicht zu groß bemessen sein.

Bei mehrteilig, beispielsweise dreiteilig, aufgebautem Luftschild ist denkbar, dass der Sensor in eine Öffnung im mittleren Luftschild eingelassen ist. Zur optimalen Einstellung der Luftströmung ist bei einem derartig aufgebauten Luftschild vorgesehen, dass die Luftströmung im mittleren Teil des Windschildes von der einheitlichen Luftströmung auf den beiden benachbarten Teilen des Luftschildes abweicht.

Im Rahmen der Erfindung sind natürlich unterschiedliche Düsen einsetzbar. Die Öffnungen der Düsen können punktförmig oder schlitzförmig gestaltet sein. Während bereits eine einzelne Düse mit Schlitzförmiger Öffnung den Aufbau eines im Wesentlichen laminaren Luftkissens erlaubt, sind bei den Düsen mit punktförmiger Öffnung mehrere Düsen für den Aufbau eines im Wesentlichen laminaren Luftkissens erforderlich. Allerdings kann mit Düsen, die eine punktförmige Luftaustrittsöffnung aufweisen bei gleichem Luftverbrauch eine höhere Luftgeschwindigkeiten erzielt werden, da die Austrittsfläche bei punktförmigen Düsen kleiner gewählt werden kann.

Eine Vielzahl von alternativen Ausführungsformen der Vorrichtung wird durch die Zahl und den Ort der Anbringung der Luftdüsen begründet. Es ist vorgesehen, dass die Düsen zur Luftzuführung entweder einer der Kanten des Luftschildes oder entlang zweier aneinander angrenzender Kanten des Luftschildes angeordnet sind. Falls die Düsen nur im Bereich einer Längskante des Luftschildes angeordnet sind, kann eine laminare Luftströmung durch mehrere entlang dieser Kante positionierte und gleich ausgerichtete Düsen bewirkt werden. Alternativ kann entlang der Kante eine Düse mit breiter schlitzförmiger Öffnung installiert werden. Natürlich ist bei Verwendung von Düsen mit schlitzartiger Luftaustrittsöffnung ebenfalls die Verwendung mehrerer Düsen entlang einer Kante denkbar.

Außerdem ist denkbar, dass die Düsen im Bereich zweier aneinander angrenzenden Kanten installiert sind. Die sich bei einem viereckigen Windschild ergebende winkelförmige Anordnung der auf zwei Linien positionierten Düsen, führt ebenfalls zum Aufbau eines laminaren Luftpolsters, falls die Einzeldüsen parallel zueinander ausgerichtet sind, so dass sich zwischen den von den Düsen ausgehenden Luftströmungen keine Turbulenzen ausbilden.

Auch der Ort und die Art der Montage der Düsen begründet unterschiedliche Ausführungsformen der Erfindung. Die Düsen können als separate Bauteile an einer oder an zwei benachbarten Kanten des Luftschildes anliegen. Darüber hinaus ist denkbar, dass die Düsen, ebenfalls als separate Bauteile, mit gewissem Abstand im Bereich einer Kante oder zweier benachbarter Kanten des Luftschildes installiert sind. Die Anbringung mit Abstand zum Luftschild erlaubt, dass die Düsen bezüglich des Luftschildes so positionierbar sind, dass das sich ausbildende Luftkissen optimal ist.

In einer Weiterbildung ist vorgesehen, dass das Luftschild im Bereich der Luftdüsen abgeschrägte Kanten aufweist. Bei entsprechender Ausrichtung der Düsen kann erreicht werden, dass die Luft auf der abgeschrägten Fläche des Luftschildes aufprallt und dadurch von Anfang an auf der Oberfläche des Luftschildes "klebt".

Falls die Düsen auf die abgeschrägte Kante des Luftschildes gerichtet sind, ist vorgesehen, dass die Düsen bezüglich der Oberfläche des Messobjektes eine Schrägstellung aufweisen. Die Schrägstellung der Düse ist Wesentlichen parallel zur abgeschrägten Kante des Luftschildes aufgerichtet. Prinzipiell wird die Ausrichtung der Düsen immer so sein, dass entlang der Oberfläche des Luftschildes eine laminare Strömung aufgebaut wird.

Denkbar ist auch, dass die Düsen in die Oberfläche des Luftschildes integriert sind, d. h. dass die Düsen in entsprechende Vertiefungen in die in der Oberfläche des Luftschildes eingelassen sind. Die Vertiefungen weisen im Querschnitt ein rampenartiges Profil auf, wobei die zur Mitte des Luftschildes gerichtete Rampe sanfter ansteigt, so dass die an Oberseite der Rampe entlang strömende Luft von Beginn an, an der Oberfläche des Luftschildes "klebt".

Es liegt im Rahmen der Erfindung, dass die Düsen mit einem oder mehreren gleichen oder verschiedenen Druckluftgeräten verbunden sind. Der Einsatz mehrerer gleicher oder unterschiedlicher Druckluftgeräte erfolgt immer mit der Zielsetzung, ein laminares Luftkissen auszubilden. Dabei können die beiden jeweils am Rand liegenden Düsen zur Stabilisierung des Luftpolsters mit einem geringfügig höheren Druck beaufschlagt werden, so dass aufgrund der stärkeren Reibung mit der stehenden Luft in den Randbereichen sich im Inneren des Luftpolsters keine Turbulenzen ausbilden können. Prinzipiell denkbar ist natürlich auch, dass die Vorrichtung mit ein einem Schutzgaz betrieben wird und alle oder insbesondere die außenliegenden Düsen nicht mit Luft, sondern mit einem Schutzgas beaufschlagt werden.

In einer alternativen Ausführungsform sind auf der der Luftzufuhr gegenüberliegenden Seite des Luftschilds Vorrichtungen bzw. Öffnungen zum Absaugen der Luft vorgesehen. Denkbar ist auch, dass innerhalb des Luftschildes Absaugkanäle angebracht sind, die auf der Oberfläche des Luftschildes enden. Das Absaugen der Luft verstärkt die für die Konstanthaltung des Abstandes vorteilhafte Sogwirkung des Luftkissens und kann zur Vermeidung von Turbulenzen dienen. Die Vermeidung von Turbulenzen kann insbesondere durch das gezielte, d.h. nur auf den Bereich der turbulenten Strömung beschränkte, Absaugen der Luft bzw. des Gases unterstützt werden.

Es ist vorgesehen, dass die aus den Einzeldüsen austretenden Luftströme in der Luftmenge und in der Geschwindigkeit regulierbar sind. Natürlich kann die Regulation der Luftmenge dabei unabhängig von der Regulation der Luftgeschwindigkeit erfolgen. Eine zusätzliche Möglichkeit zur Herstellung eines laminaren Luftkissens zwischen Messobjekt und Luftschild besteht in der entsprechenden Steuerung der Luftabsaugung die den luftzuführenden Düsen gegenüber liegt.

Als Sensoren für die Dickenmessung sind sämtliche dem Fachmann bekannten Sensoren einsetzbar. Insbesondere vorgesehen sind kapazitive, induktive und/oder optische Sensoren. Auch der Einsatz radiometrischer Sensoren, die auf Strahlenbasis, beispielsweise γ-Strahlen, arbeiten, können zum Einsatz kommen. Kapazitive Sensoren sind geeignet, wenn das Kunststoffmaterial als Dielektrikum die Kapazität einer Kondensatoranordnung beeinflusst. Induktive Sensoren kommen dagegen zum Einsatz, wenn das Folienmaterial elektrisch leitfähig ist. Grundsätzlich ist denkbar, dass in einer Messvorrichtung mehrere gleichartige oder unterschiedliche Sensoren zum Einsatz kommen. Die Verwendung mehrere Sensoren kann vorteilhaft sein, wenn die Oberfläche der Folie in Struktur und/oder Farbe inhomogen ist.

Im Rahmen der Erfindung ist der Einsatz der dem Fachmann bekannten mikroelektronischen Vorrichtungen zum Steuern und Regeln technischer Vorrichtungen vorgesehen; diese betrifft auch die Verschaltung der Messvorrichtung mit dem Extruder und mit nachgeschalteten Produktionsvorrichtungen. Insbesondere ist vorgesehen, dass die Vorrichtung einer Speichereinheit und einen oder mehrere Abstandsmesser beinhaltet, die durch elektrische Schaltung miteinander verbunden sind und den jeweiligen Abstand zwischen Messobjekt und Luftschild und/oder zwischen Messobjekt und dem am Luftschild bewegbar befestigten Sensor registrieren und die Messwerte in eine Speichereinheit einschreiben. Durch Subtraktion der beider Werte lässt sich die Position des Sensorkopfes bezüglich des Luftschildes genau errechnen.

Zur Beobachtung der beispielsweise sinusförmigen Schwingungen des Messobjektes relativ zur Oberseite des Windschildes ist auf einer Seite des Windschilds im Kantenbereich ein Sender und auf der gegenüberliegenden Seite ein Empfänger installiert. Sender und Empfänger sind jeweils bewegbar befestigt. Ziel der Beobachtung ist eine unabhängige Validierung der Messbedingungen, die insbesondere beim Anfahren des Produktionsprozesses zur Absicherung der Messqualität dienlich sein kann. Beim Sender kann es sich beispielsweise um eine Lichtquelle, einen LED-Balken oder einen Laser handeln. Als Empfänger kommen die dem Fachmann bekannten auf den jeweiligen Sender abgestimmten Detektoren oder eine bzw. mehrere Kameras in Frage.

Denkbar ist auch ein Verfahren (auf das jedoch kein Anspruch gerichtet ist), dem die Verwendung der beschriebenen Vorrichtung zu Grunde liegt. Im Rahmen der Messung eines Dickenprofils ist dabei vorgesehen, dass die gemessenen Abstände zwischen dem Messobjekt und dem Luftschild und zwischen dem Messobjekt und dem am Luftschild bewegbar befestigten Sensorkopf bei Abweichung von vorgegebenen Sollwerten nicht als Messwerte registriert werden.

Im Rahmen eines Verfahrens (auf das jedoch kein Anspruch gerichtet ist) kann auch vorgesehen sein, dass die Messvorrichtung bei einer nach dem Extruderverfahren hergestellten und sich in axialer Richtung bewegenden Folieblase um diese rotiert, so dass sich eine schraubenförmige Messlinie ergibt. Die auf der schraubenförmigen Messlinie erfassten Daten werden zur weiteren Auswertung in eine Speichereinheit eingeschrieben. Insgesamt werden durch dieses Verfahren sehr kurze Messzeiten erreicht.

Natürlich ist der Einsatz der Vorrichtung auch in einem Bereich denkbar, in dem die Folie bereits flachgelegt ist oder ausgehend von der hohlzylindrischen aus dem Extruder kommenden hohlzylindrischen Blase gerade in eine flache Lage überführt wird. Die Messvorrichtung kann in diesem Fall ortsfest oder beweglich befestigt sein. Im Folgenden sollen weitere Einzelheiten und Merkmale der Erfindung anhand von Beispielen näher erläutert werden. Die abgebildeten Beispiele sollen die Erfindung jedoch nicht einschränken, sondern nur erläutern. Es zeigen in schematischer Darstellung:
- **Figur 1**: Seitenansicht der Vorrichtung
- **Figur 2**: Dreiseiten-Ansicht der Vorrichtung
- **Figur 3**: Mögliche Düsenanordnungen
- **Figur 4**: Variation von Luftgeschwindigkeit und Luftmenge

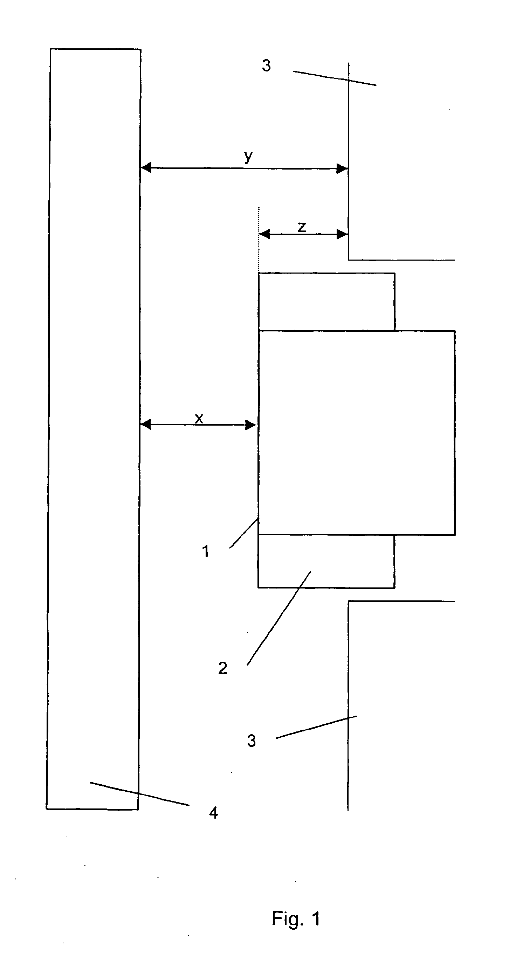

Figur 1 zeigt eine Seitenansicht der erfindungsgemäßen Vorrichtung, wobei der Sensor 1 von einer Halterung 2, die ein zusätzliches den Sensorkopf umgebendes Luftschild bildet, aufgenommen wird. Die Öffnung im Luftschild 3 ist so bemessen, dass der auf das Messgut 4 gerichtete Sensorkopf inherhalb der Öffnung bewegbar ist. Der Abstand x zwischen Messobjekt 4 und Sensor 1 berechnet sich, in dem vom konstanten Abstand y zwischen Messobjekt 4 und Luftschild 3 die Weglänge z abgezogen wird (y-z=x). z entspricht der Wegstrecke, um die der in der Halterung 2 beweglich befestigte Sensor 1 über die Oberfläche des Luftschildes 3 hinausbewegt wurde.

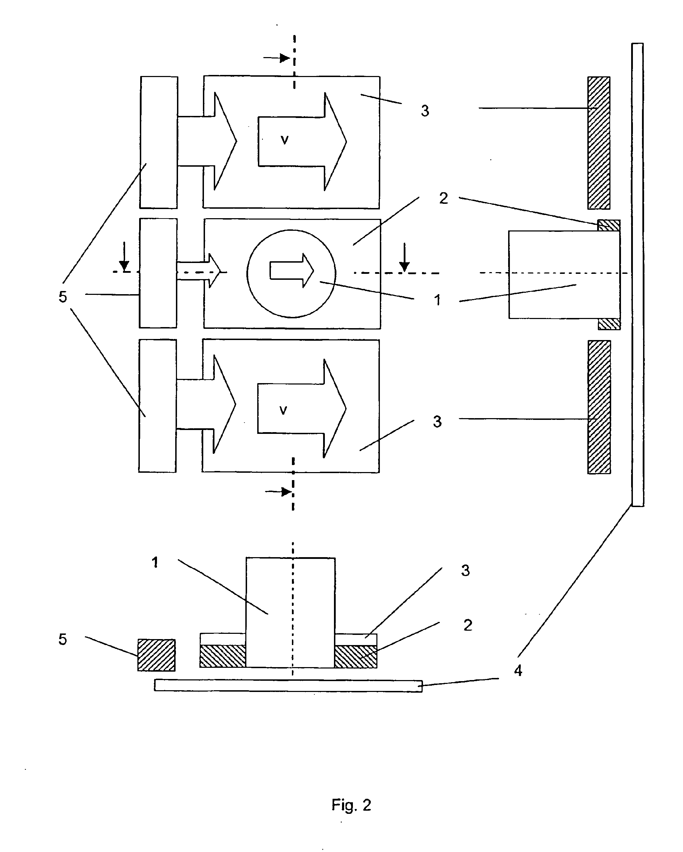

Figur 2 zeigt die Vorrichtung in der Dreiseiten-Ansicht. Während der Querschnitt aus der Seitensicht den Sensor 1 in einer im Vergleich zum Luftschild 3 veränderten Position zeigt, ist im Querschnitt der Aufsicht der Sensor 1 deckungsgleich mit den seitlichen Luftschild 3. In der Aufsicht auf die Fläche des Luftschildes 3 ist durch Pfeile die Richtung des homogenen und laminaren Luftstroms, der hier im Schema mehrteilig gezeigt ist, dargestellt. Die von der mittleren Luftdüse 5 ausgehende Luftströmung ist auf das den Sensor umgebende mittlere Luftschild 2 gerichtet. Die Strömung der mittleren Luftdüse 5 ist im gezeigten Beispiel im Vergleich zu den von den beiden verbleibenden Düsen 5 ausgehenden Luftströmungen schwächer. Symbolisiert wird die Stärke der Luftströmung durch die Größe der Pfeile.

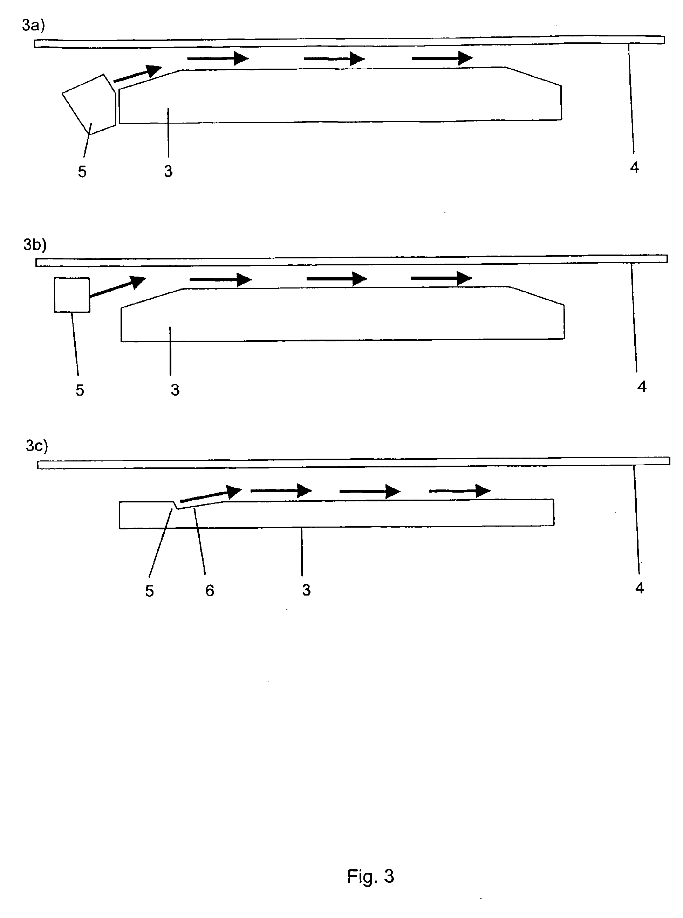

Die Figuren 3a, 3b und 3c zeigen im Querschnitt die Positionierung der Düsen 5 bezüglich des Luftschildes 3. Gezeigt sind 3 mögliche Anordnungsformen. In Figur 3a ist die Düse 5 entlang des längsseitigen Randes des Luftschildes 3 angebracht, wobei die Kanten auf der Oberseite des Luftschildes 3 abgeschrägt sind, und auch die Luftdüse 5 eine Schrägstellung aufweist. Durch die zurückgesetzte Anordnung der Düse 5 kann das Messgut 4 mit größtmöglicher Freiheit am Luftschild 3 und dem darin integriertem Sensor entlang geführt werden. Die Schrägstellung der Düse 5 erlaubt, dass die Luftströmung bereits an der abgeschrägten Kante des Luftschildes 3 ausgerichtet werden kann.

In Figur 3b ist die Düse 5 im Bereich einer der Kanten des Luftschildes 3 separat positioniert. Diese Anordnung bietet sich besonders dann an, wenn die Beabstandung zwischen Messgut 4 und Luftschild 3 nicht häufig verändert werden muss, d. h. wenn die Messvorrichtung vorwiegend am gleichen Ort und für das gleiche Messgut 4 eingesetzt wird.

Figur 3c zeigt die Integration der Düsen 5 in den Luftschild 3. Zu diesem Zweck wird auf der Oberfläche des Luftschildes 3 entlang einer der Kanten eine rillenartige Vertiefung 6 eingelassen, die sich rampenartig öffnet. An der steiler abfallenden Rückseite der rampenartigen Öffnung ist die Düse 5 eingelassen. Die aus der Düse 5 ausströmende Luft breitet sich entlang des Luftschildes 3 aus und erzeugt eine Sogwirkung, die ebenso wie in den beiden anderen gezeigten Anordnungen vorteilhafterweise zu einer konstanten Beabstandung zwischen Luftschild 3 und Messobjekt 4 führt.

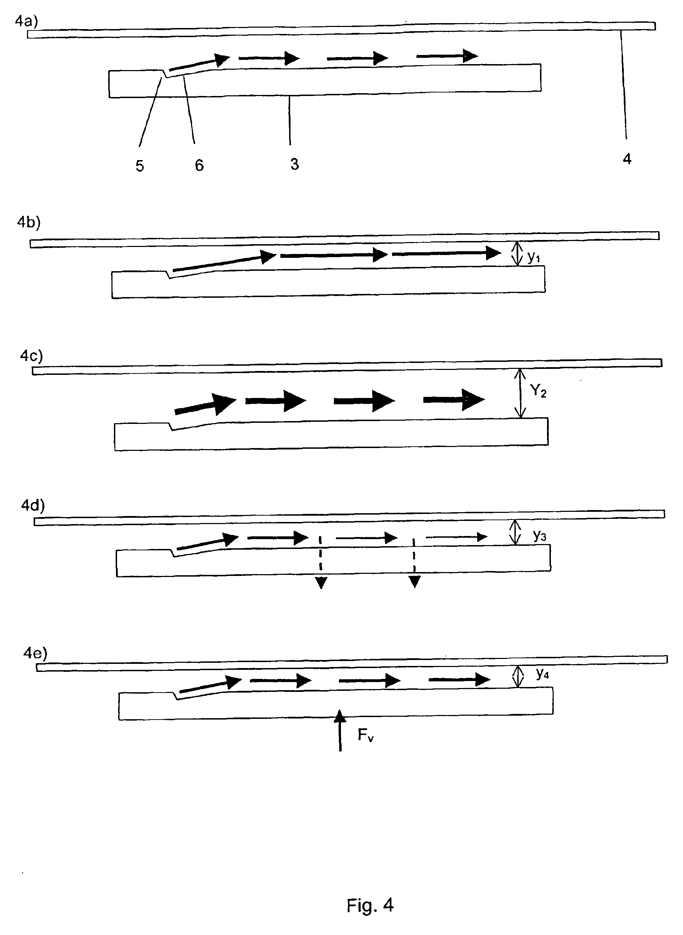

Figur 4 zeigt im Querschnitt den Luftschild 3 mit integrierten Luftdüsen 5 und das Messgut 4. Die Luftströmung ist durch Pfeile symbolisiert. In Figur 4a ist die Grundeinstellung mit dem Abstand Y₀ gezeigt.

Eine Verkürzung des Abstandes auf Y₁ ist einstellbar, in dem die Luftgeschwindigkeit bei Zuführung der gleichen Luftmenge erhöht wird (Figur 4b). Eine Vergrößerung des Abstandes auf Y₂ wird erreicht, indem über die Düsen 5 eine höhere Luftmenge bei gleicher Luftgeschwindigkeit zugeführt wird (Figur 4c). Die größere Luftmenge wird durch die fetteren Pfeile symbolisiert, während die größere Luftgeschwindigkeit durch die längeren Pfeile angezeigt werden soll. In Figur 4d wird eine Anordnung gezeigt, bei der zugleich Luft durch entsprechende Öffnungen im Luftschild 3 abgesaugt wird. Aufgrund der zusätzlichen Sogwirkung ist der Abstand Y₃ kleiner als der Abstand Y₀.

In Figur 4e ist eine Grundeinstellung gezeigt, die der zuerst gezeigten Grundeinstellung entspricht, wobei eine zusätzliche Vorspannung auf den Luftschild 3 ausgeübt wird. Aufgrund der Vorspannung ist der Abstand Y₄ zur Folie kleiner als der Abstand Y₀.

### Bezugszeichenliste

1. Sensor
2. Halterung für den Sensor mit seitlichem Luftschild
3. Luftschild
4. Messobjekt / Messgut
5. Düse
6. Vertiefung mit Rampenprofil

## Patentansprüche

1. Vorrichtung zur Messung der Dicke von dünnschichtigen Messobjekten (4), insbesondere von Folien oder Filmen,
mit einem Sensor (1),
einem Luftschild (3) mit oder ohne Öffnung für den Sensor (1), und
einer ein- oder mehrteiligen, im Randbereich des Luftschildes (3) angeordneten Luftzufuhr (5),
wobei jene Randbereiche des Luftschildes, welche der Luftzufuhr (5) gegenüberliegen, offen und/oder mit Luftabsaugvorrichtungen versehen sind, und wobei zum Aufbau einer laminaren Strömung zwischen Messobjekt (4) und dem Sensor (1) bzw. dem den Sensor umgebenden Luftschild (3) die Strahlrichtung der Luftzufuhr (5) im Wesentlichen tangential zur Oberfläche des Messobjektes (4) ausgerichtet ist.

2. Vorrichtung nach Anspruch 1, wobei das Luftschild (3) zum Aufbau einer laminaren Luftströmung kippbar befestigt ist.

3. Vorrichtung nach einem der vorhergehenden Ansprüche, wobei der Sensor (1) manuell oder maschinell justierbar am Luftschild befestigt ist und der Abstand des Messobjekts (4) zum Sensor (1) und zum Luftschild (3) variabel einstellbar ist.

4. Vorrichtung nach einem der vorhergehenden Ansprüche wobei der Sensor (1) und das Luftschild (3) in senkrechter und/oder paralleler Richtung zum Messobjekt (4) bewegbar befestigt sind.

5. Vorrichtung nach einem der vorhergehenden Ansprüche, wobei das Luftschild (3) ein- oder mehrteilig aufgebaut ist.

6. Vorrichtung nach einem der vorhergehenden Ansprüche, wobei der Sensor (1) an einer am Luftschild (3) befestigten Halterung fixiert ist und die Öffnung für den Sensor (1) im Luftschild (3) so bemessen ist, dass der Sensor (1) oder zumindest der Sensorkopf innerhalb dieser Öffnung in alle drei Raumrichtungen bewegbar ist.

7. Vorrichtung nach einem der vorhergehenden Ansprüche Anspruch 5, wobei der Luftschild (3) dreiteilig aufgebaut ist, wobei der Sensor (5) in eine Öffnung im mittleren Teil eingelassen ist.

8. Vorrichtung nach einem der vorhergehenden Ansprüche, wobei die Luftzufuhr (5) aus Düsen (5) besteht, die punktförmige und/oder schlitzförmige Luftaustrittsöffnungen aufweisen.

9. Vorrichtung nach Anspruch 8, wobei die Düsen (5) zur Luftzuführung entlang einer der Kanten des Luftschildes (3) oder entlang zweier aneinander angrenzender Kanten des Luftschildes (3) angeordnet sind.

10. Vorrichtung nach Anspruch 8 oder 9, wobei die Düsen (5) zur Luftzuführung
- als separate Bauteile an einer Kante oder an zwei benachbarten Kanten des Luftschilds (3), und/oder
- als separate Bauteile mit Abstand im Bereich einer Kante oder zweier benachbarter Kanten des Luftschildes (3) installiert sind.

11. Vorrichtung nach einem der Anspruch 8-10, wobei das Luftschild (3) im Bereich der Luftdüsen (5) abgeschrägte Kanten aufweist und die Luftaustrittsöffnungen der Düsen (5) auf die Abschrägung gerichtet sind.

12. Vorrichtung nach Anspruch 11, wobei die auf die abgeschrägte Kante des Luftschildes (3) gerichteten Luftdüsen (5) eine Schrägstellung aufweisen.

13. Vorrichtung nach einem der Ansprüche 8 - 12, wobei die Düsen (5) entlang einer oder entlang zweier benachbarter Kanten des Luftschildes (3) in die Oberfläche des Luftschildes integriert sind und wobei die in die Oberfläche des Luftschildes integrierten Düsen (5) in eine zusammenhängende oder mehrere einzelne rampenartige Vertiefungen (6) eingelassen sind.

14. Vorrichtung nach einem der Ansprüche 8- 13, wobei die Düsen (5) mit einem oder mehreren gleichen oder unterschiedlichen Druckluftgeräten zur Erzeugung einer laminaren Strömung verbunden sind.

15. Vorrichtung nach einem der Ansprüche 8 - 14, wobei
- auf der den Düsen (5) gegenüberliegenden Seite des Luftschildes und/oder
- auf der Oberfläche des Luftschilds (3) endende Öffnungen zum Absaugen der Luft vorgesehen sind.

16. Vorrichtung nach einem der Ansprüche 8 - 15, wobei die aus mehreren Düsen (5) austretenden Luftströme durch Variation
- der Luftmenge,
- der Luftgeschwindigkeit und/oder
- der Luftabsaugung
derart regulierbar und derart auf einander abstimmbar sind, dass zwischen Messobjekt (4) und Luftschild (3)
- eine laminare Strömung und
- eine konstante Beabstandung
einstellbar ist.

17. Vorrichtung nach einem der vorhergehenden Ansprüche, wobei als Sensoren (1) zur Dickenmessung kapazitive, induktive, optische, radiometrische Sensoren und/oder Ultraschall-Sensoren vorgesehen sind.

18. Vorrichtung nach einem der vorhergehenden Ansprüche, wobei die Vorrichtung mehrere gleichartige oder unterschiedliche Sensoren aufweist.

19. Vorrichtung nach einem der vorhergehenden Ansprüche, wobei die Vorrichtung eine Speichereinheit und einen oder mehrere Abstandsmesser beinhaltet, die durch eine elektrische Schaltung miteinander verbunden sind, wobei der jeweilige Abstand zwischen
- dem Messobjekt (4) und dem Luftschild (3) sowie
- dem Messobjekt (4) und dem am Luftschild (3) bewegbar befestigten Sensorkopf (1)
messbar und in eine Speichereinheit einschreibbar ist.

20. Vorrichtung nach einem der vorhergehenden Ansprüche, wobei die Pendelbewegung des Messobjektes (4) in senkrechter Richtung zum Luftschild (3) durch einen Sender und einen entsprechenden Empfänger detektierbar ist, wobei der Sender auf einer Seite des Luftschildes 3 beweglich befestigt ist und der Empfänger auf der gegenüberliegenden Seite des Luftschildes 3 befestigt ist.

21. Vorrichtung nach Anspruch 20, wobei der Sender eine Lichtquelle, ein LED-Balken oder ein Laser ist.

22. Vorrichtung nach Anspruch 20, wobei der Empfänger ein Detektor oder eine Kamera ist.

## Claims

1. Device for measuring the thickness of thin-layer objects to be measured (4), in particular of foils or films, comprising
- a sensor (1),
- an air shield (3) with or without an opening for the sensor (1), and
- a one or more part air supply (5), which is disposed in the edge region of the air shield (3),
those edge regions of the air shield that are opposite the air supply (5) being open and/or provided with air suction devices, and the jet direction of the air supply (5) being directed in a substantially tangential direction with respect to the surface of the object (4) to be measured in order to achieve a laminar flow between the object (4) to be measured and the sensor (1) or the air shield (3) surrounding the sensor.

2. Device according to claim 1, wherein the air shield (3) is fastened such that it can be tilted in order to build up a laminar air flow.

3. Device according to one of the preceding claims, wherein the sensor (1) is fixed on the air shield such that it can be manually or mechanically adjusted, and the distance of the object (4) to be measured from the sensor (1) and from the air shield (3) is variably adjustable.

4. Device according to one of the preceding claims, wherein the sensor (1) and the air shield (3) are fixed so as to be movable in a direction perpendicular to and/or parallel to the object (4) to be measured.

5. Device according to one of the preceding claims, wherein the air shield (3) is one or multi-part in construction.

6. Device according to one of the preceding claims, wherein the sensor (1) is fixed on a bracket that is fastened on the air shield (3), and the aperture for the sensor (1) in the air shield (3) is dimensioned such that the sensor (1) or at least the sensor head within this aperture is movable in all three spatial directions.

7. Device according to one of the preceding Claims Claim 5 [sic], wherein the air shield (3) is three-part in construction, the sensor (5) being inlet into an aperture in the centre part.

8. Device according to one of the preceding claims, wherein the air supply (5) comprises nozzles (5), which have point-like and/or slit-like air-outlet apertures.

9. Device according to Claim 8, wherein the nozzles (5) for air supply are arranged along one of the edges of the air shield (3) or along two contiguous edges of the air shield (3).

10. Device according to Claim 8 or 9, wherein the nozzles (5) for air supply are installed
- as separate components on one edge or on two adjacent edges of the air shield (3), and/or
- as separate components with a spacing in the region of one edge or of two adjacent edges of the air shield (3).

11. Device according to one of claims 8-10, wherein the air shield (3) has bevelled edges in the region of the air nozzles (5) and the air-outlet apertures of the nozzles (5) are directed onto the bevel.

12. Device according to Claim 11, wherein the air nozzles (5) that are directed onto the bevelled edge of the air shield (3) are obliquely positioned.

13. Device according to one of claims 8-12, wherein the nozzles (5) along one or along two adjacent edges of the air shield (3) are integrated into the surface of the air shield and wherein the nozzles (5) that are integrated in the surface of the air shield are inset into one coherent or a plurality of individual ramp-like depressions (6).

14. Device according to one of claims 8-13, wherein the nozzles (5) are connected to one or a plurality of identical or different compressed air units for generating a laminar flow.

15. Device according to one of claims 8 - 14, wherein apertures that are terminated
- on that side of the air shield opposite the nozzles (5) and/or
- on the surface of the air shield (3)
are provided for extracting the air.

16. Device according to one of claims 8-13, wherein the air streams emerging from a plurality of nozzles (5), by variation of
- the air flow rate
- the air velocity and/or
- the air extraction,
can be regulated and matched to one another such that
- a laminar flow and
- a constant spacing
can be adjusted between the object (4) to be measured and the air shield (3).

17. Device according to one of the preceding claims, wherein, as sensors (1) for thickness measurement, capacitive, inductive, optical, radiometric sensors and/or ultrasound sensors are provided.

18. Device according to one of the preceding claims, wherein the device has a plurality of identical or different sensors.

19. Device according to one of the preceding claims, wherein the device is a storage unit and includes one or more distance gauges, which are connected to one another by means of an electrical circuit,
- the distance between the object (4) to be measured and the air shield (3) as well as
- the distance between the object (4) to be measured and the sensor head (1) which is fastened on the air shield (3) so as to be movable being measurable and writable in a storage unit.

20. Device according to one of the preceding claims, wherein the swinging movement of the object (4) to be measured is detectable in a direct perpendicular to the air shield (3) by means of a transmitter and a corresponding receiver, the transmitter being fastened on one side of the air shield (3) so as to be movable and the receiver being fastened on the opposite side of the air shield (3).

21. Device according to claim 20, wherein the transmitter is a light source, an LED strip or a laser.

22. Device according to claim 20, wherein the receiver is a detector or a camera.

## Revendications

1. Dispositif destiné à mesurer l'épaisseur d'objets de mesure à couche mince (4),
notamment de feuilles ou de films,
avec un capteur (1),
un bouclier d'air (3) avec ou sans ouverture pour le capteur (1), et une alimentation en air (5) en une ou plusieurs pièces, disposée dans la zone du bord du bouclier d'air (3),
sachant que les zones de bord du bouclier d'air qui se trouvent en face de l'alimentation en air (5) sont ouvertes et/ou pourvues de dispositifs d'aspiration de l'air, et sachant que, dans le but de créer un courant laminaire entre l'objet de mesure (4) et le capteur (1) ou le bouclier d'air (3) entourant le capteur, le sens du jet de l'alimentation en air (5) est essentiellement disposé de façon tangentielle par rapport à la surface de l'objet de mesure (4).

2. Dispositif selon la revendication 1, sachant que le bouclier d'air (3) est fixé de façon à pouvoir basculer afin de créer un courant d'air laminaire.

3. Dispositif selon une des revendications précédentes, sachant que le capteur (1) est fixé sur le bouclier d'air de façon à pouvoir être ajusté manuellement ou automatiquement et que la distance de l'objet de mesure (4) par rapport au capteur (1) et au bouclier d'air (3) peut être réglé de façon variable.

4. Dispositif selon une des revendications précédentes, sachant que le capteur (1) et le bouclier d'air (3) sont fixés de façon mobile dans un sens vertical et/ou parallèle par rapport à l'objet de mesure (4).

5. Dispositif selon une des revendications précédentes, sachant que le bouclier d'air (3) est constitué d'une ou de plusieurs pièces.

6. Dispositif selon une des revendications précédentes, sachant que le capteur (1) est monté sur un support fixé sur le bouclier d'air (3) et que l'ouverture pour le capteur (1) dans le bouclier d'air (3) est mesuré de façon à ce que le capteur (1) ou au moins la tête du capteur à l'intérieur de cette ouverture peut être déplacée dans les trois dimensions spatiales.

7. Dispositif selon une des revendications précédentes, sachant que le bouclier d'air (3) possède une construction en trois parties, sachant que le capteur (5) est inséré dans une ouverture située dans la partie médiane.

8. Dispositif selon une des revendications précédentes, sachant que l'alimentation en air (5) consiste en buses (5) présentant des ouvertures de sortie d'air en forme de points et/ou de fentes.

9. Dispositif selon la revendication 8, sachant que les buses (5) destinées à l'alimentation en air sont disposées le long d'un des bords du bouclier d'air (3) ou le long de deux bords voisins l'un de l'autre du bouclier d'air (3).

10. Dispositif selon les revendications 8 ou 9, sachant que les buses (5) destinées à l'alimentation en air sont installées
- en tant que composants séparés sur un bord ou sur deux bords voisins du bouclier d'air (3), et/ou
- en tant que composants séparés à une certaine distance dans la zone d'un bord ou de deux bords voisins du bouclier d'air (3).

11. Dispositif selon une des revendications 8 à 10, sachant que le bouclier d'air (3) présente des bords chanfreinés dans la zone des buses d'air (5) et que les ouvertures de sortie d'air des buses (5) sont dirigées vers le chanfrein.

12. Dispositif selon la revendication 11, sachant que les buses d'air (5) orientées vers le bord chanfreiné du bouclier d'air (3) présentent un positionnement en biais.

13. Dispositif selon une des revendications 8 à 12, sachant que les buses (5) sont intégrées le long d'un ou le long de deux bords voisins du bouclier d'air (3) dans la surface du bouclier d'air, et sachant que les buses (5) intégrées dans la surface du bouclier d'air sont insérées dans un renfoncement d'un seul tenant ou dans plusieurs renfoncements individuels (8) ayant la forme d'une rampe.

14. Dispositif selon une des revendications 8 à 13, sachant que les buses (5) sont reliées à un ou plusieurs appareils d'air comprimé identiques ou différents destinés à générer un courant laminaire.

15. Dispositif selon une des revendications 8 à 14, sachant que des ouvertures finales destinées à aspirer l'air sont prévues
- sur la face du bouclier d'air opposée aux buses (5) et/ou
- sur la surface du bouclier d'air (3).

16. Dispositif selon une des revendications 8 à 15, sachant que les courants d'air sortant de plusieurs buses peuvent être régulés et synchronisés les uns avec les autres en faisant varier
- la quantité d'air,
- la vitesse de l'air et/ou
- l'aspiration de l'air
de façon à pouvoir régler
- un courant laminaire et
- une distance constante
entre l'objet de mesure (4) et le bouclier d'air (3).

17. Dispositif selon une des revendications précédentes, sachant que des capteurs capacitifs, inductifs, optiques, radiométriques et/ou des capteurs à ultrasons sont prévus pour mesurer l'épaisseur.

18. Dispositif selon une des revendications précédentes, sachant que le dispositif présente plusieurs capteurs identiques ou différents.

19. Dispositif selon une des revendications précédentes, sachant que le dispositif comprend une unité de mémoire et un ou deux mesureurs de distance qui sont reliés les uns aux autres par une commutation électrique, sachant que la distance respective entre
- l'objet de mesure (4) et le bouclier d'air (3) ainsi que
- l'objet de mesure (4) et la tête de capteur (1) fixée de façon mobile sur le bouclier d'air
peut être mesurée et enregistrée dans une unité de mémoire.

20. Dispositif selon une des revendications précédentes, sachant que le mouvement pendulaire de l'objet de mesure (4) dans le sens vertical par rapport au bouclier d'air (3) peut être détecté par un émetteur et un détecteur correspondant, sachant que l'émetteur est fixé de façon mobile sur une face du bouclier d'air (3), et que le récepteur est fixé sur la face opposée au bouclier d'air (3).

21. Dispositif selon la revendication 20, sachant que l'émetteur est une source de lumière, une barre LED ou un laser.

22. Dispositif selon la revendication 20, sachant que le récepteur est un détecteur ou une caméra.
